# EUROPÄISCHE PATENTSCHRIFT

(11) **EP 4 048 619 B1**
(45) Veröffentlichungstag und Bekanntmachung des Hinweises auf die Patenterteilung: **02.12.2026**
(21) Anmeldenummer: 20796574.0
(22) Anmeldetag: 22.10.2020
(51) Int. Cl.: B66B 7/02

(54) **BEFESTIGUNGSSYSTEM ZUM MONTIEREN EINER KONSOLE EINES SCHIENENSYSTEMS EINER AUFZUGANLAGE AN EINER WAND, SCHIENENSYSTEM UND VERFAHREN ZUM MONTIEREN**
FIXING ELEMENT AND FIXING SYSTEM FOR MOUNTING A BRACKET OF A RAIL SYSTEM OF AN ELEVATOR SYSTEM ON A WALL, RAIL SYSTEM AND METHOD FOR MOUNTING
ÉLÉMENT DE FIXATION ET SYSTÈME DE FIXATION PERMETTANT DE MONTER UNE CONSOLE D'UN SYSTÈME SUR RAILS D'UNE INSTALLATION D'ASCENSEUR SUR UN MUR, SYSTÈME SUR RAILS ET PROCÉDÉ DE MONTAGE

(30) Priorität: 23.10.2019 EP 19204909
(43) Veröffentlichungstag der Anmeldung: 31.08.2022
(73) Patentinhaber: INVENTIO AG, 6052 Hergiswil (CH)
(72) Erfinder: BÜTLER, Erich, 6030 Ebikon (CH); LO JACONO, Romeo, 6929 Gravesano (CH)
(74) Vertreter: Inventio AG
(86) Internationale Anmeldenummer: PCT/EP2020/079763
(87) Internationale Veröffentlichungsnummer: WO 2021/078866

(56) Entgegenhaltungen:
- DE-A1- 102006 048 655
- JP-A- 2006 036 450
- JP-A- 2015 054 754
- US-A- 5 469 938

## Beschreibung

Die vorliegende Erfindung betrifft, ein Befestigungssystem mit zwei Befestigungselementen zum Montieren einer Konsole eines Schienensystems einer Aufzuganlage an einer Wand, ein Schienensystem für eine Aufzuganlage und ein Verfahren zum Montieren einer Konsole eines Schienensystems einer Aufzuganlage an einer Wand.

Eine Konsole ist Teil einer Unterkonstruktion für ein Schienensystem einer Aufzuganlage. Die Konsole wird teilweise auch als Bracket bezeichnet. Entlang einer Erstreckungsrichtung des Schienensystems können mehrere Konsolen angeordnet sein. Die Konsolen werden an einer Wand beispielsweise eines Aufzugschachts befestigt. Damit das Schienensystem möglichst geradlinig aufgebaut werden kann, werden die Konsolen bei der Montage in mehreren Achsen ausgerichtet. Dokument DE 10 2006 048655 beschreibt ein Befestigungssystem für eine Konsole eines Schienensystems einer Aufzuganlage.

Die FR 2 996 216 zeigt eine Befestigung einer an der Wand montierten Aufzugsführung.

Das Ausrichten kann beispielsweise über ein Relativverschieben von miteinander

verschraubten Elementen erfolgen. Die Verschiebung kann durch zumindest ein quer zur auszurichtenden Achse ausgerichtetes Langloch in zumindest einem der Elemente ermöglicht werden. Eine Relativposition der ausgerichteten Elemente kann beispielsweise unter Verwendung eines durch beide Elemente gesteckten Passstifts gesichert werden. Es kann unter anderem ein Bedarf an einem verbesserten Befestigungssystem, einem verbesserten Schienensystem und einem verbesserten Verfahren zum Montieren einer Konsole eines Schienensystems einer Aufzuganlage an einer Wand bestehen.

Einem solchen Bedarf kann durch , ein Befestigungssystem mit zwei Befestigungselementen zum Montieren einer Konsole eines Schienensystems einer Aufzuganlage an einer Wand, ein Schienensystem für eine Aufzuganlage und ein entsprechendes Verfahren zum Montieren einer Konsole eines Schienensystems einer Aufzuganlage an einer Wand gemäß den unabhängigen Ansprüchen entsprochen werden. Vorteilhafte Ausführungsformen sind in den abhängigen Ansprüchen definiert.

Gemäß einem ersten Aspekt der Erfindung wird ein Befestigungssystem für eine Konsole eines Schienensystems einer Aufzuganlage vorgeschlagen, wobei das Befestigungssystem zwei Befestigungselemente, einen Ankerbolzen und zumindest zwei Muttern umfasst, wobei jedes Befestigungselement zum Montieren einer Konsole eines Schienensystems einer Aufzuganlage eine Klemmplatte mit einem Durchgangsloch und eine Aufnahmehülse zum Aufnehmen des Ankerbolzens aufweist, wobei die Aufnahmehülse eine Durchgangsbohrung für den Ankerbolzen aufweist und zwischen der Klemmplatte und der Aufnahmehülse ein winkelbewegliches Kugelgelenk ausgebildet ist, und wobei der Ankerbolzen in einer Wand verankerbar ist und ein Außengewinde aufweist, die Muttern auf das Außengewinde aufschraubbar sind und die Befestigungselemente zwischen den Muttern auf dem Ankerbolzen anordenbar sind, wobei die Konsole zwischen den Befestigungselementen positionierbar, ausrichtbar und klemmbar ist.

Gemäß einem zweiten Aspekt der Erfindung wird ein Schienensystem für eine Aufzuganlage vorgeschlagen, wobei das Schienensystem eine unter Verwendung von wenigstens einem Befestigungssystem gemäß dem ersten Aspekt der Erfindung an einer Wand befestigte Konsole aufweist, wobei die Konsole zumindest einen Durchbruch aufweist, durch den ein in einer Wand verankerter Ankerbolzen geführt ist, wobei der Durchbruch um eine Positionierungstoleranz größer als ein Durchmesser des Ankerbolzens ist und ein Rand des Durchbruchs zwischen zwei auf den Ankerbolzen aufgeschobenen Befestigungselementen gemäß dem zweiten Aspekt der Erfindung geklemmt ist, wobei die Befestigungselemente zwischen zwei auf dem Ankerbolzen gekonterten Muttern geklemmt sind.

Gemäß einem dritten Aspekt der Erfindung wird ein Verfahren zum Montieren einer Konsole eines Schienensystems einer Aufzuganlage an einer Wand unter Verwendung von einem Befestigungssystem gemäß dem ersten Aspekt der Erfindung mit zwei Befestigungselementen vorgeschlagen, wobei die Befestigungselemente je eine Klemmplatte mit einem Durchgangsloch und eine Aufnahmehülse für einen Ankerbolzen aufweisen, wobei die Aufnahmehülse eine Durchgangsbohrung für den Ankerbolzen aufweist und zwischen der Klemmplatte und der Aufnahmehülse ein winkelbewegliches Kugelgelenk angeordnet ist, wobei der Ankerbolzen in der Wand verankert wird, eine erste Mutter auf ein Außengewinde des Ankerbolzens aufgeschraubt wird, das erste Befestigungselement mit der Aufnahmehülse voran auf den Ankerbolzen aufgeschoben wird, bis die Aufnahmehülse an der ersten Mutter anliegt, der Ankerbolzen durch einen Durchbruch der Konsole geführt wird, bis ein Rand des Durchbruchs an der Klemmplatte des ersten Befestigungselements anliegt, wobei das zweite Befestigungselement mit der Klemmplatte voran auf den Ankerbolzen aufgeschoben wird, bis die Klemmplatten den Rand berühren und eine zweite Mutter auf das Außengewinde aufgeschraubt wird, um die Konsole zwischen den Befestigungselementen einzuklemmen, wobei zum Ausrichten der Konsole ein Abstand der Konsole zur Wand durch ein Verstellen der ersten und zweiten Mutter auf dem Außengewinde eingestellt wird, eine vertikale und eine horizontale Position der Konsole durch ein Verschieben der Konsole innerhalb einer durch eine Größe des Durchbruchs vorgegebene Positionierungstoleranz eingestellt wird und ein Winkelversatz zwischen der Konsole und dem Ankerbolzen durch ein Verdrehen der Kugelgelenke ausgeglichen wird, wobei die Muttern nach dem Ausrichten gekontert werden, um die Konsole zwischen den Befestigungselementen zu fixieren.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Eine Aufzuganlage kann eine im Wesentlichen vertikal transportierende Personentransportanlage sein. Die Aufzuganlage kann beispielsweise innerhalb eines Aufzugschachts eines Gebäudes angeordnet sein. Die Aufzuganlage kann auch außen an einem Gebäude angeordnet sein. Die Aufzuganlage kann zumindest eine vertikal bewegliche Kabine aufweisen. Die Kabine kann zwischen mehreren Etagen beziehungsweise Stockwerken des Gebäudes hin und her bewegt werden. Der Aufzugschacht kann pro angeschlossener Etage eine Landestelle aufweisen. Die Kabine kann durch ein mit dem Gebäude verbundenes Schienensystem geführt sein.

Eine Konsole kann ein Konstruktionselement des Schienensystems sein. Die Konsole kann zwischen den Schienen des Schienensystems und dem Gebäude angeordnet sein. Die Konsole kann ein tragendes Element des Schienensystems sein. Das Schienensystem kann unter Verwendung mehrerer Konsolen mit einer Wand des Gebäudes beziehungsweise des Aufzugschachts verbunden sein. Die Konsole kann ein Querträger des Schienensystems sein. Die Konsole kann aus einem Metallmaterial bestehen. Die Konsole kann beispielsweise aus geformtem Metallblech bestehen. Die Konsole kann ein im Wesentlichen U-förmiges Profil aufweisen. An der Konsole können weitere Komponenten des Schienensystems beziehungsweise der Aufzuganlage befestigt sein.

Unter Verwendung des hier vorgestellten Befestigungssystems beziehungsweise von zwei der hier vorgestellten Befestigungselementen kann die Konsole mit einem in der Wand verankerten Ankerbolzen verbunden werden. Der Ankerbolzen kann auf einem Großteil seiner Länge ein Außengewinde aufweisen. Das Außengewinde kann ein metrisches Gewinde sein. Bei einem Außendurchmesser des Ankerbolzens von 16 Millimetern kann das Außengewinde beispielsweise ein M16 Gewinde sein. Die Muttern können ein zum Außengewinde passendes Innengewinde aufweisen. Der Ankerbolzen kann ein Schwerlastanker sein, der in einer Bohrung in der Wand befestigt wird. Der Ankerbolzen kann zumindest ein Spreizelement und einen Spreizkonus aufweisen. Das Spreizelement kann auf dem Spreizkonus abgleiten und an eine Seitenfläche der Bohrung gepresst werden. Dadurch kann der Ankerbolzen insbesondere hohe Zugkräfte auf die Wand übertragen. Das Spreizelement kann durch Anziehen einer an der Wand anliegenden Mutter abgespreizt werden. Zwischen der Mutter und der Wand kann eine Unterlegscheibe angeordnet werden. Alternativ oder ergänzend kann der Ankerbolzen auch in die Bohrung eingeklebt werden.

Die Klemmplatte kann kreisförmig sein. Die Klemmplatte kann eine ringförmige Klemmfläche aufweisen. In der Mitte der Klemmfläche kann eine Aussparung in Form eines Durchgangslochs für den Ankerbolzen angeordnet sein. Die Klemmfläche kann eben sein. Die Aufnahmehülse kann eine Anlagefläche für die auf den als Wandanker wirkenden Ankerbolzen geschraubte Mutter aufweisen. Die Anlagefläche kann quer zu der Durchgangsbohrung ausgerichtet sein. Die Durchgangsbohrung kann einen geringfügig größeren Durchmesser aufweisen, als das Außengewinde des Ankerbolzens. In einer Neutralposition des Kugelgelenks kann die Klemmfläche senkrecht zu einer Mittelachse der Durchgangsbohrung ausgerichtet sein.

Ein Durchbruch in der Konsole kann ein großes Loch sein. Der Durchbruch kann beispielweise kreisförmig sein. Der Durchbruch kann um ein Vielfaches größer als ein Durchmesser des Wandankers sein. Der Durchbruch kann aus der Konsole ausgestanzt sein. Alternativ kann der Durchbruch durch Laserschneiden aus der Konsole geschnitten sein. Wenn der Ankerbolzen mittig im Durchbruch angeordnet ist, bildet ein Abstand eines Rands beziehungsweise einer Kante des Durchbruchs von dem Wandanker die Positionierungstoleranz in Richtung des Abstands.

Die Konsole kann zwischen zwei Klemmplatten zweier Befestigungselemente, welche zwischen zwei auf den Ankerbolzen geschraubten Muttern gehalten sind, eingeklemmt werden. Zum Einklemmen des das Durchgangsloch in der Konsole umgebenden Rands wird die zweite Mutter zunächst nicht fest angezogen. Wenn der Rand zwischen den Klemmflächen eingeklemmt ist, kann die Konsole zwischen den Befestigungselementen innerhalb der Positionierungstoleranz verschoben werden, da die Klemmflächen mit einer geringen Klemmkraft gegen die Konsole gepresst werden.

Ein Kugelgelenk kann zwei gegeneinander in zumindest zwei Raumrichtungen bewegliche Gelenkflächen aufweisen. Zwei das Kugelgelenk bildende Komponenten können somit in verschiedene Orientierungen relativ zueinander bewegt werden. Die Gelenkflächen können komplementär zueinander sein. Die Gelenkflächen können als Teilbereiche von Kugeloberflächen mit gleichem Radius geformt sein. Die Teilbereiche können unterschiedlich groß sein. Ebenso können die Teilbereiche gleich groß sein. Das Kugelgelenk kann beispielsweise zwischen die Aufnahmehülse und die Klemmplatte eingeschoben sein. Die Gelenkflächen können auch durch die aneinander angrenzenden Bauteile, d.h. von der Aufnahmehülse und der Klemmplatte selbst, ausgebildet sein.

Ein Winkelversatz kann beispielsweise durch einen schräg in der Wand verankerten Wandanker entstehen. Der Winkelversatz kann auch durch eine Form der Wand entstehen.

Beim Verdrehen der Kugelgelenke können die Befestigungselemente auf der Konsole gleiten. Durch die Verdrehung innerhalb der Kugelgelenke, die Verschiebung innerhalb des Durchbruchs und die Verschiebung entlang des Ankerbolzens kann die Konsole in allen Raumrichtungen ausgerichtet werden.

Beim Kontern werden zumindest zwei Muttern auf demselben Außengewinde des Ankerbolzens in unterschiedliche Drehrichtungen aufeinander zu bewegt und so ein Abstand zwischen den Muttern verkleinert. Die zwischen den Muttern befindlichen Befestigungselemente und die Konsole werden dabei zusammengepresst und die erreichte Position und Winkelstellung der Konsole durch einen resultierenden Kraftschluss fixiert. Die Kugelgelenke werden ebenfalls zusammengepresst und so in ihrer momentanen Winkelstellung fixiert.

Die Konsole kann zumindest eine Ausrichtkimme aufweisen. Die Konsole kann vor dem Kontern der Muttern unter Verwendung der Ausrichtkimme und eines Lots ausgerichtet werden. Eine Ausrichtkimme kann eine Markierung sein, die durch zumindest eine Aussparung und/oder zumindest einen Vorsprung der Konsole ausgebildet wird. Die Ausrichtkimme kann beim Ausrichten beispielsweise an einem Laserstrahl eines Laserlots oder einer Schnur eines Schnurlots ausgerichtet werden, damit die Schienen des Schienensystems geradlinig und senkrecht verlaufen.

Das Befestigungssystem kann zumindest eine Federscheibe umfassen. Zwischen dem zweiten Befestigungselement und der zweiten Mutter können eine oder mehrere Federscheiben auf dem Ankerbolzen angeordnet werden. Die Federscheibe kann durch ein Vor-Anziehen der zweiten Mutter vorgespannt werden, um die Konsole zwischen den Klemmplatten zu klemmen. Eine Federscheibe kann eine Unterlegscheibe mit einer dreidimensionalen Vor-Verformung im entspannten Zustand sein. Die Federscheibe kann beispielsweise geschlitzt sein und in entspanntem Zustand eine Spiralform aufweisen. Alternativ kann ein äußerer Rand der Federscheibe gegenüber einen inneren Rand der Federscheibe aufgebogen sein. Beim Vor-Anziehen wird die Federscheibe um einen Federweg zumindest minimal platt gedrückt und reagiert auf diese Verformung um den Federweg mit einer Gegenkraft. Durch die Federscheibe kann das Verschieben der Konsole zwischen den Klemmplatten vereinfacht werden, weil die Klemmkraft der Gegenkraft entspricht.

Ein konkaves Widerlager des Kugelgelenks kann in der Klemmplatte ausgebildet sein. Ein konvexes Druckstück des Kugelgelenks kann an der Aufnahmehülse ausgebildet sein. Umgekehrt kann ein konkaves Druckstück in der Aufnahmehülse ausgebildet sein und ein konvexes Widerlager kann an der Klemmplatte ausgebildet sein. Das Kugelgelenk kann also durch die Klemmplatte und die entsprechend geformte Aufnahmehülse ausgebildet sein. Das Befestigungselement kann lediglich aus zwei Teilen bestehen. Das Widerlager und das Druckstück können jeweils einen Teilbereich einer Kugelfläche ausbilden. Das Widerlager und das Druckstück können unterschiedlich große Teilbereiche der Kugelfläche ausbilden. Die Kugelflächen können denselben Radius aufweisen. Die Teilbereiche können jeweils der Oberfläche einer Kugelschicht entsprechen.

Das konkave Widerlager kann näherungsweise halbkugelförmig sein. Alternativ oder ergänzend kann das konvexe Druckstück näherungsweise halbkugelförmig sein. Durch eine Halbkugelform kann ein großer Winkelverstellbereich erreicht werden. Beispielsweise kann ein Winkelverstellbereich von ± 20° erreicht werden. Insbesondere kann ein Winkelverstellbereich von ± 15° erreicht werden. Insbesondere kann ein Winkelverstellbereich von ± 10° erreicht werden.

Das Durchgangsloch durch die Klemmplatte kann größer als die Durchgangsbohrung der Aufnahmehülse sein, um die Winkelbeweglichkeit des Kugelgelenks bei in der Durchgangsbohrung aufgenommenem Ankerbolzen zu ermöglichen. Das Durchgangsloch kann der Aussparung in der Klemmfläche entsprechen. Das Durchgangsloch kann das Widerlager des Kugelgelenks mit der Klemmfläche verbinden. Das Durchgangsloch kann beispielsweise einen Durchmesser zwischen 30 Millimetern und 40 Millimetern aufweisen. Insbesondere kann das Durchgangsloch einen Durchmesser von 35 Millimetern aufweisen. Das Durchgangsloch kann konisch ausgeführt sein.

Die Klemmfläche der Klemmplatte kann wesentlich größer als eine der Klemmfläche entgegengesetzte Rückseite der Klemmplatte sein. Ein Rand der Klemmplatte kann näherungsweise spitz zulaufen. Eine Seitenfläche der Klemmplatte kann schräg zur Klemmfläche ausgerichtet sein. Die Seitenfläche kann kegelstumpfförmig sein. Durch die schräge Seitenfläche kann Material gespart werden und ein Gewicht des Befestigungselements anforderungsgerecht reduziert werden.

Die Klemmplatte kann einen Durchmesser zwischen 12 Zentimeter und 15 Zentimeter aufweisen. Der Durchmesser der Klemmplatte kann insbesondere 13 Zentimeter betragen. Der Durchmesser der Klemmplatte kann wesentlich größer als ein Durchmesser des Durchbruchs der Konsole sein. Der Durchbruch kann beispielsweise 10 Zentimeter Durchmesser aufweisen. Durch den größeren Durchmesser passt die Klemmplatte nicht durch den Durchbruch und liegt in allen Positionen der Positionierungstoleranz sicher am Rand des Durchbruchs an. In Extrempositionen kann die Klemmplatte auch nur an einem Teilbereich des Rands anliegen.

Die Konsole kann zumindest einen weiteren Durchbruch aufweisen, durch den ein weiterer in der Wand verankerter Ankerbolzen geführt ist. Ein Rand des weiteren Durchbruchs kann zwischen zwei weiteren auf den Ankerbolzen aufgeschobenen Befestigungselementen gemäß dem zweiten Aspekt der Erfindung geklemmt sein. Die weiteren Befestigungselemente können zwischen zwei auf dem weiteren Ankerbolzen gekonterten Muttern geklemmt sein. Die Konsole kann an zumindest zwei Ankerbolzen mit der Wand verbunden sein. Dadurch kann die Konsole gegen ein Verdrehen gesichert sein. Durch die Kugelgelenke kann insbesondere auf zusätzliche Befestigungspunkte verzichtet werden, da die Konsole in allen Raumrichtungen ausgerichtet werden kann.

Es wird darauf hingewiesen, dass einige der möglichen Merkmale und Vorteile der Erfindung hierin mit Bezug auf unterschiedliche Ausführungsformen als beschrieben sind. Ein Fachmann erkennt, dass die Merkmale des Verfahrens zum Montieren, des Befestigungselements und der Konsole in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine räumliche Darstellung einer Konsole für ein Schienensystem gemäß einem Ausführungsbeispiel;
Fig. 2 zeigt eine Schnittdarstellung durch ein Befestigungssystem gemäß einem Ausführungsbeispiel;
Fig. 3 zeigt eine räumliche Darstellung eines Befestigungssystems beim Ausrichten gemäß einem Ausführungsbeispiel;
Fig. 4 zeigt eine Darstellung einer ausgerichteten Konsole eines Schienensystems gemäß einem Ausführungsbeispiel; und
Fig. 5 zeigt eine Schnittdarstellung durch ein ausgerichtetes Befestigungssystem gemäß einem Ausführungsbeispiel.

Die Figuren sind lediglich schematisch und nicht maßstabsgetreu. Gleiche Bezugszeichen bezeichnen in den verschiedenen Figuren gleiche oder gleichwirkende Merkmale

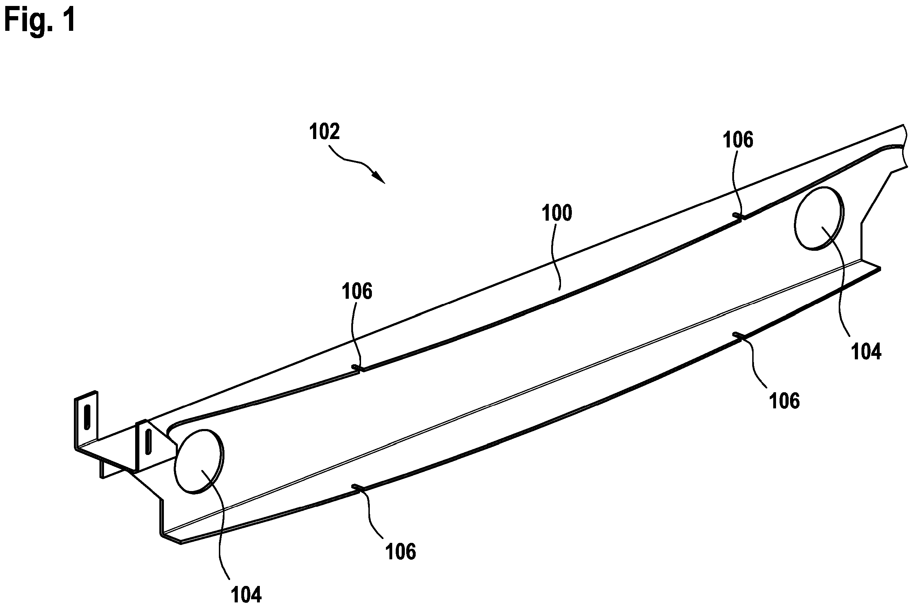

Fig. 1 zeigt eine räumliche Darstellung einer Konsole 100 für ein Schienensystem 102 gemäß einem Ausführungsbeispiel. Die Konsole 100 ist in einem nicht montierten Zustand dargestellt. Die Konsole 100 ist ein Querträger des Schienensystems 102 einer Aufzuganlage. Die Konsole 100 ist aus Blech. Beispielsweise ist die Konsole 100 als Stanzbiegeteil ausgeführt. Das Blech der Konsole ist hier beispielsweise fünf Millimeter dick. Die Konsole 100 ist im Wesentlichen U-förmig beziehungsweise C-förmig profiliert, um einen erhöhten Biegewiderstand aufzuweisen. Durch die Profilierung weist die Konsole eine Bodenfläche und zwei aus der Bodenfläche in die gleiche Richtung abgekantete Seitenflächen auf. Die Seitenflächen weisen an entgegengesetzten Endbereichen eine geringere Höhe auf, als in der Mitte, sind also bauchförmig beziehungsweise bogenförmig.

Die Konsole 100 weist in den Endbereichen zwei Durchbrüche 104 auf. Die Durchbrüche 104 sind hier kreisförmig und weisen einen Durchmesser von 100 Millimetern auf. Die Durchbrüche 100 sind in der Bodenfläche der Konsole 100 angeordnet. Die Durchbrüche 104 sind mittig zwischen den Seitenflächen angeordnet.

Eine der Seitenflächen weist an den Endbereichen je eine verbreiterte Fläche mit von der Konsole wegzeigenden Laschen auf. Die Laschen weisen je ein quer zu einer Haupterstreckungsrichtung der Konsole 100 ausgerichtetes Langloch auf.

In einem Ausführungsbeispiel weisen die Seitenflächen in der Nähe der Endbereiche je eine Ausrichtkimme 106 auf. Die Ausrichtkimmen 106 eines Endbereichs sind dabei jeweils auf einer gemeinsamen Linie senkrecht zu der Haupterstreckungsrichtung angeordnet. Die Ausrichtkimmen 106 sind hier als U-förmige Kerben in den Rändern der Seitenflächen ausgebildet. Die Ausrichtkimmen 106 können auch als Erhebungen über den Rand der Seitenflächen ausgeführt sein.

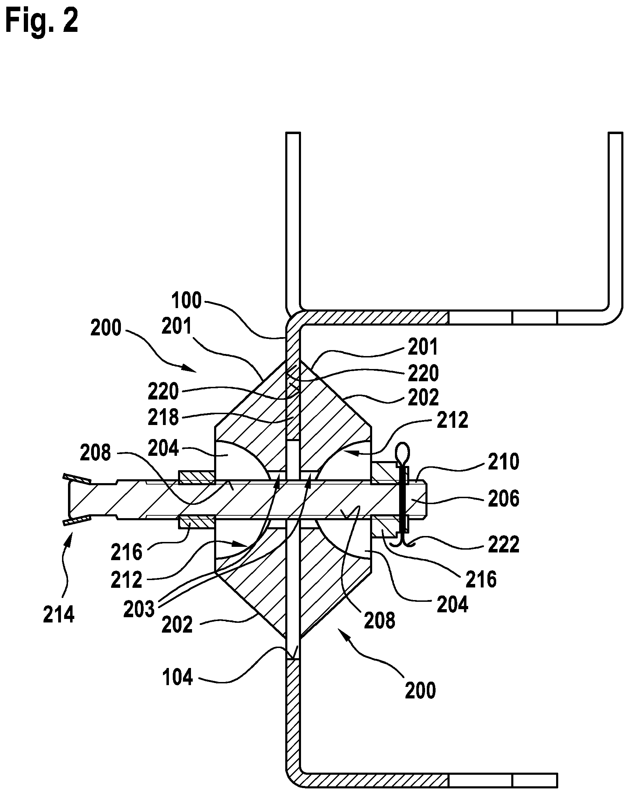

Fig. 2 zeigt eine Schnittdarstellung durch ein montiertes Befestigungssystem 200 gemäß einem Ausführungsbeispiel. Das Befestigungssystem 200 umfasst zwei Befestigungselemente 201 gemäß einem Aspekt der Erfindung. Die Befestigungselemente 201 sind auf entgegengesetzten Seiten der Bodenfläche einer im Wesentlichen der Darstellung in Fig. 1 entsprechenden Konsole 100 angeordnet. Die Befestigungselemente 201 weisen je eine Klemmplatte 202 mit einem Durchgangsloch 203 und eine Aufnahmehülse 204 für einen Ankerbolzen 206 auf. Die Aufnahmehülsen 204 weisen je eine Durchgangsbohrung 208 für den Ankerbolzen 206 auf. Die Durchgangsbohrungen 208 weisen einen geringfügig größeren Durchmesser als ein Außengewinde 210 des Ankerbolzens 206. Zwischen einer Aufnahmehülse 204 und der zugehörigen Klemmplatte 202 ist je ein Kugelgelenk 212 ausgebildet.

Der Ankerbolzen 206 ist hier als Schwerlastanker ausgebildet und weist an einem Ende eine Klemmeinrichtung 214 auf. Das Ende wird in einer hier nicht dargestellten Bohrung in einer nicht dargestellten Wand angeordnet und unter Verwendung der Klemmeinrichtung 214 in der Wand verankert. Das gegenüberliegende Ende des Ankerbolzens 206 ragt dann aus der Wand. Eine erste Mutter 216 wird auf das Außengewinde 210 aufgeschraubt und das erste Befestigungselement 201 mit der Aufnahmehülse 204 voran auf den Ankerbolzen 206 gesteckt, bis die Aufnahmehülse 204 an der ersten Mutter 216 anliegt. Der Ankerbolzen 206 wird dann durch Durchbruch 104 geführt und ein Rand 218 des Durchbruchs 104 an eine Klemmfläche 220 der Klemmplatte 202 angelegt.

Das Befestigungssystem 200 besteht also aus den zwei Befestigungselementen 201, dem Ankerbolzen 206 und den zumindest zwei Muttern 216. Das Befestigungssystem 200 kann beispielsweise vorkonfektioniert werden. Dabei können die Bestandteile des Befestigungssystems 200 verlustsicher auf dem Ankerbolzen 206 angeordnet werden. Der Ankerbolzen kann auch mit den darauf angeordneten Muttern 216 und Befestigungselementen 201 in der Wand verankert werden. Zur Montage der Konsole 100 werden dann nur die zweite Mutter 216 und das zweite Befestigungselement 201 abgenommen und die Konsole 100 aufgesteckt.

Anschließend wird das zweite Befestigungselement 201 mit der Klemmplatte 202 voran auf den Ankerbolzen 206 gesteckt, bis die Klemmfläche 220 auf einer entgegengesetzten Seite des Rands 218 anliegt.

Das zweite Befestigungselement 201 wird durch eine zweite Mutter 216 gesichert. Die zweite Mutter 216 wird nur leicht angezogen, damit die Konsole 100 zwischen den Befestigungselementen 201 bewegt werden kann. Wenn eine Position und Lage bzw. Orientierung der Konsole in allen Raumrichtungen ausgerichtet ist, werden die Muttern 216 gekontert und mit einem erforderlichen Drehmoment angezogen. Dadurch werden die Befestigungselemente 201 gegen die Konsole 100 gepresst und die Position und Lage bzw. Orientierung fixiert.

In einem Ausführungsbeispiel ist die zweite Mutter 216 eine Kronenmutter. Wenn die Muttern 216 gekontert sind, wird der Ankerbolzen 206 zwischen den Zinken einer Krone der Kronenmutter quer durchbohrt und ein Splint 222 durch die Bohrung und die Krone gesteckt. Durch den Splint 222 kann sich die zweite Mutter 126 nicht lösen und ist gegen Verlust gesichert.

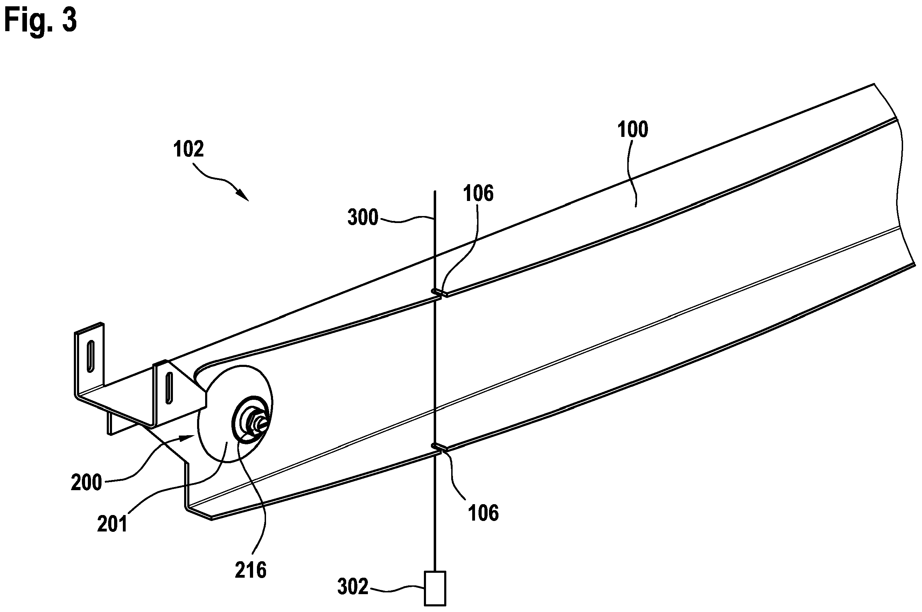

Fig. 3 zeigt eine räumliche Darstellung eines Befestigungssystems 200 beim Ausrichten gemäß einem Ausführungsbeispiel. Die Konsole 100 entspricht dabei im Wesentlichen den Darstellungen in den Figuren 1 und 2. Hier wird ein Laserstrahl 300 verwendet, um die Konsole 100 im Raum auszurichten. Der Laserstrahl 300 wird dabei von einer Lichtquelle 302 an einem unteren Ende des Schienensystems 102 senkrecht nach oben abgestrahlt. Der Laserstrahl 300 ist dabei an einer Stelle angeordnet, an der die Ausrichtkimmen 106 der Konsole 100 konstruktionsgemäß angeordnet sein sollen. Die Konsole 100 wird dann unter Verwendung der Befestigungselemente 201 und den Muttern 216 so lange verschoben und verdreht, bis der Laserstrahl 300 durch die Ausrichtkimmen 106 verläuft.

Anstelle des Laserstrahls 300 kann auch eine Schnur eines Schnurlots verwendet werden, die an einem oberen Ende des Schienensystems 102 befestigt ist und senkrecht nach unten hängt.

Um die Konsole 100 auszurichten, können für die rechten und linken Ausrichtkimmen zwei unterschiedliche Laserstrahlen 300 von unterschiedlichen Lichtquellen 302 verwendet werden. Alternativ kann der nach oben abgestrahlte Laserstrahl 300 an einem oberen Ende des Schienensystems 102 unter Verwendung einer Spiegelvorrichtung seitlich umgelenkt werden und an der Stelle, an der die anderen Ausrichtkimmen 106 konstruktionsgemäß angeordnet sein sollen wieder nach unten gelenkt werden.

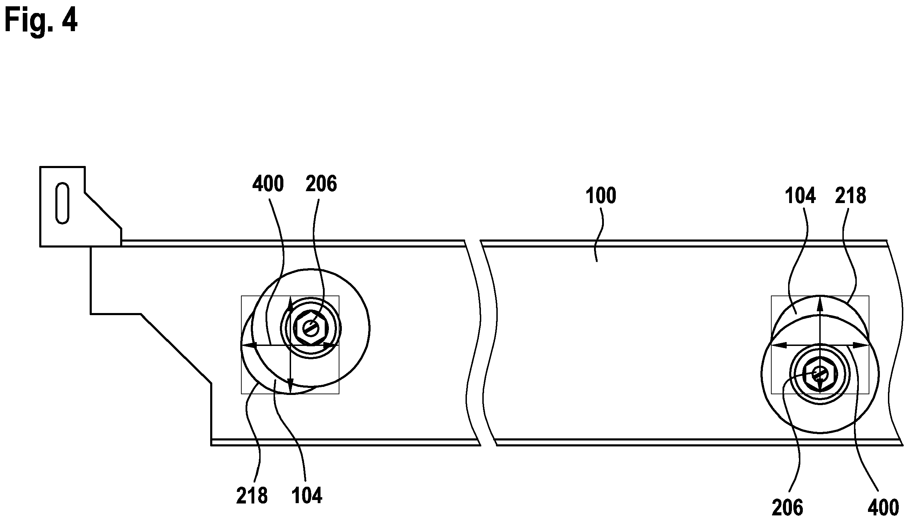

Fig. 4 zeigt eine Darstellung einer ausgerichteten Konsole 100 gemäß einem Ausführungsbeispiel. Die Konsole 100 entspricht im Wesentlichen den Darstellungen in den vorhergehenden Figuren. Hier sind die Ankerbolzen 206 ungenau gesetzt worden und die Ungenauigkeiten während des Ausrichtens unter Ausnutzung einer Positionierungstoleranz 400 der Durchbrüche 104 kompensiert worden. Eine Oberseite der Konsole 100 ist waagerecht ausgerichtet worden.

Der in der Darstellung linke Ankerbolzen 206 ist hier zu weit rechts und zu weit oben gesetzt worden. Der in der Darstellung rechte Ankerbolzen 206 ist hier zu weit unten gesetzt worden. Durch die große Positionierungstoleranz 400 von im Wesentlichen 50 Millimetern in Y-Richtung und Z-Richtung, also links/rechts und oben/unten, kann der linke Ankerbolzen 206 nach rechts oben versetzt im rechten Durchbruch 104 angeordnet werden, während der rechte Ankerbolzen 206 nach unten versetzt im Durchbruch 104 angeordnet werden kann. Da die Positionierungstoleranz 400 hier stark ausgenutzt worden ist, liegen die Klemmflächen nur noch bereichsweise am Rand 218 der Durchbrüche 104 auf.

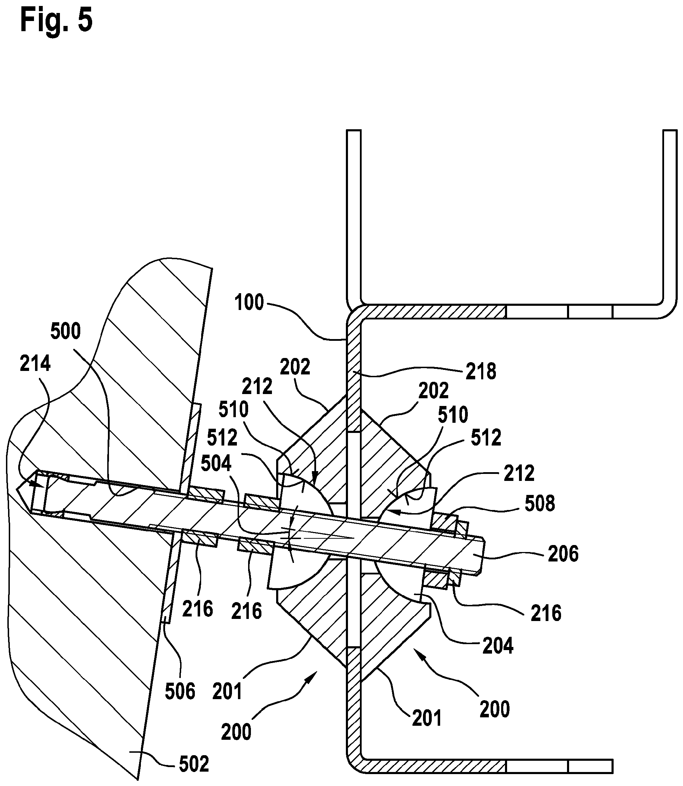

Fig. 5 zeigt eine Schnittdarstellung durch ein ausgerichtetes Befestigungssystem 200 gemäß einem Ausführungsbeispiel. Die Darstellung entspricht dabei im Wesentlichen der Darstellung in Fig. 2. Im Gegensatz dazu eine Bohrung 500 in einer Wand 502 aufgrund einer Unebenheit der Wand 502 mit 10° Winkelversatz 504 zur Horizontalen gesetzt worden, damit der Ankerbolzen 206 senkrecht zur Oberfläche der Wand 502 ausgerichtet ist. Auf der Oberfläche liegt eine große Unterlegscheibe 506 auf, gegen die eine weitere Mutter 216 geschraubt ist, um die Klemmeinrichtung 214 gegen die Seitenfläche der Bohrung 500 zu verklemmen. Um den Winkelversatz 504 des Ankerbolzens 206 zu kompensieren sind die Kugelgelenke 212 um die 10° ausgelenkt. Da die Aufnahmehülsen 204 durch den Ankerbolzen 206 geführt sind, ergibt sich ein Höhenversatz der beiden Befestigungselemente 201.

In einem Ausführungsbeispiel ist zwischen der zweiten Mutter 216 und der Aufnahmehülse 204 des zweiten Befestigungselements 201 eine Federscheibe 508 angeordnet. Die Federscheibe 508 ist hier als geschlitzte Scheibe ausgeführt. Im hier dargestellten gekonterten Zustand ist die Federscheibe 508 maximal komprimiert und liegt damit flächig an der Aufnahmehülse 204 und der Mutter 216 an.

Zum Ausrichten der Konsole 100 wird die zweite Mutter 216 nur mit einem geringen Ausricht-Drehmoment gegen die Federscheibe 508 geschraubt, um eine so geringe Klemmkraft der Klemmscheiben 202 am Rand 218 zu erreichen, dass der Rand 218 zwischen den Klemmscheiben 202 verschoben werden kann.

In einem Ausführungsbeispiel weisen die Klemmplatten 202 je eine zumindest näherungsweise einen Kugelabschnitt abbildende Vertiefung als Widerlager 510 des Kugelgelenks 212 auf, während die Aufnahmehülsen 204 je einen zumindest näherungsweise den Kugelabschnitt abbildenden Vorsprung als Druckstück 512 aufweisen. Hier sind das Widerlager 510 und das Druckstück 512 halbkugelförmig.

Mit anderen Worten wird in den Figuren 1 bis 5 ein Befestigungselement bzw. ein damit ausgebildetes Befestigungssystem gezeigt, mit dem Brackets an einer Wand befestigt werden können. Das Befestigungselement kann als Kugelscheibe bezeichnet werden. Zwei Befestigungselemente können an einem Ankerbolzen gekontert werden und lassen eine Einstellung der Lage des Brackets in sechs Dimensionen zu.

Die Ausrichtung und Lage kann unter Verwendung von Lotschnüren eingestellt werden. Dazu können die Brackets unter Verwendung der Befestigungselemente im Raum bewegt werden, um die Ausrichtung zu ermöglichen. So können Toleranzen des Aufzugschachts kompensiert werden. Die Ausrichtung erfolgt dabei unter Verwendung zweier Ankerbolzen, einem Kugelgelenk und zwei großen Löchern im Bracket. Der Abstand zur Wand wird über die Muttern auf den Ankerbolzen eingestellt. Die Translation erfolgt innerhalb der großen Löcher. Rotationen erfolgen in dem sphärischen Gelenk.

Dadurch kann das Bracket im Raum frei platziert werden, und eine präzise Ausrichtung unabhängig von Toleranzen des Aufzugschachts und der Ankerbolzen sichergestellt werden. Wenn das Bracket ausgerichtet ist, werden die Muttern auf den Kugelgelenken angezogen, um das System zusammenzupressen und zu fixieren.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Befestigungssystem (200) für eine Konsole (100) eines Schienensystems (102) einer Aufzuganlage, wobei das Befestigungssystem zwei Befestigungselemente (201), einen Ankerbolzen (206) und zumindest zwei Muttern (216) umfasst, wobei jedes Befestigungselement (201) zum Montieren einer Konsole (100) eines Schienensystems (102) einer Aufzuganlage eine Klemmplatte (202) mit einem Durchgangsloch (203) und eine Aufnahmehülse (204) zum Aufnehmen des Ankerbolzens (206) aufweist, wobei die Aufnahmehülse (204) eine Durchgangsbohrung (208) für den Ankerbolzen (206) aufweist und zwischen der Klemmplatte (202) und der Aufnahmehülse (204) ein winkelbewegliches Kugelgelenk (212) ausgebildet ist, und wobei der Ankerbolzen (206) in einer Wand (502) verankerbar ist und ein Außengewinde (210) aufweist, die Muttern (216) auf das Außengewinde (210) aufschraubbar sind und die Befestigungselemente (201) zwischen den Muttern (216) auf dem Ankerbolzen (206) anordenbar sind, wobei die Konsole (100) zwischen den Befestigungselementen (201) positionierbar, ausrichtbar und klemmbar ist.

2. Befestigungssystem (200)nach Anspruch 1, wobei ein konkaves Widerlager (510) des Kugelgelenks (212) in einer oder beiden der Klemmplatten (202) ausgebildet ist und ein konvexes Druckstück (512) des Kugelgelenks (212) an einer oder beiden der Aufnahmehülsen (204) ausgebildet ist.

3. Befestigungssystem (200)nach Anspruch 2, wobei eines oder beide der konkaven Widerlager (510) zumindest bereichsweise näherungsweise halbkugelförmig ist oder sind
und/oder
eines oder beide der konvexen Druckstücke (212) zumindest bereichsweise näherungsweise halbkugelförmig ist oder sind.

4. Befestigungssystem (200)nach einem der vorangehenden Ansprüche, wobei das oder die Durchgangslöcher (203) durch eine oder beide der Klemmplatten (202) größer als die Durchgangsbohrung (208) der zugehörigen Aufnahmehülse (204) ist oder sind, um die Winkelbeweglichkeit des Kugelgelenks bei in der Durchgangsbohrung (208) aufgenommenem Ankerbolzen (206) zu ermöglichen.

5. Befestigungssystem (200) nach einem der vorangehenden Ansprüche, wobei
eine Klemmfläche (220) einer oder beider der Klemmplatten (202) wesentlich größer als eine der Klemmfläche entgegengesetzte Rückseite derselben Klemmplatte (202) ist oder sind.

6. Befestigungssystem (200)nach einem der vorangehenden Ansprüche, wobei eine oder beide der Klemmplatten (202) einen Durchmesser zwischen 12 Zentimeter und 15 Zentimeter aufweist oder aufweisen.

7. Befestigungssystem (200) nach einem der vorangehenden Ansprüche , wobei das Befestigungssystem ferner eine Federscheibe (508) umfasst, wobei die Federscheibe (508) zwischen einer der Muttern (216) und einem der Befestigungselemente (201) auf dem Ankerbolzen (206) anordenbar ist.

8. Schienensystem (102) für eine Aufzuganlage, wobei das Schienensystem (102) eine unter Verwendung von wenigstens einem Befestigungssystem (200) nach einem der Ansprüche 1 bis 7 an einer Wand (502) befestigte Konsole (100) aufweist, wobei die Konsole (100) zumindest einen Durchbruch (104) aufweist, durch den ein in der Wand (502) verankerter Ankerbolzen (206) geführt ist, wobei der Durchbruch (104) um eine Positionierungstoleranz (400) größer als ein Durchmesser des Ankerbolzens (206) ist und ein Rand (128) des Durchbruchs (104) zwischen den wenigstens zwei auf den Ankerbolzen (206) aufgeschobenen Befestigungselementen (201) geklemmt ist, wobei die Befestigungselemente (201) zwischen zwei auf dem Ankerbolzen (206) gekonterten Muttern (216) geklemmt sind.

9. Schienensystem (102) nach Anspruch 8, wobei die Konsole (100) zumindest einen weiteren Durchbruch (104) aufweist, durch den ein weiterer in der Wand (502) verankerter Ankerbolzen (206) geführt ist, wobei ein Rand (218) des weiteren Durchbruchs (104) zwischen zwei weiteren auf den weiteren Ankerbolzen (206) aufgeschobenen Befestigungselementen (201) nach einem der Ansprüche 1 bis 6 geklemmt ist, wobei die weiteren Befestigungselemente (201) zwischen zwei auf dem weiteren Ankerbolzen (206) gekonterten Muttern (216) geklemmt sind.

10. Verfahren zum Montieren einer Konsole (100) eines Schienensystems (102) einer Aufzuganlage an einer Wand (502) unter Verwendung von einem Befestigungssystem (200) gemäß einem der Ansprüche 1 bis 7, wobei
- ein Ankerbolzen (206) in der Wand (502) verankert wird,
- eine erste Mutter (216) auf ein Außengewinde (210) des Ankerbolzens (206) aufgeschraubt wird,
- das erste Befestigungselement (201) mit der Aufnahmehülse (204) voran auf den Ankerbolzen (206) aufgeschoben wird, bis die Aufnahmehülse (204) an der ersten Mutter (216) anliegt,
- der Ankerbolzen (206) durch einen Durchbruch (104) der Konsole (100) geführt wird, bis ein Rand (218) des Durchbruchs (104) an der Klemmplatte (202) des ersten Befestigungselements (201) anliegt,
- das zweite Befestigungselement (201) mit der Klemmplatte (202) voran auf den Ankerbolzen (206) aufgeschoben wird, bis die Klemmplatten (202) den Rand (218) berühren und
- eine zweite Mutter (216) auf das Außengewinde (210) aufgeschraubt wird, um die Konsole (100) zwischen den Befestigungselementen (201) einzuklemmen,
wobei zum Ausrichten der Konsole (100) ein Abstand der Konsole (100) zur Wand (502) durch ein Verstellen der ersten und zweiten Mutter (216) auf dem Außengewinde (210) eingestellt wird, eine vertikale und eine horizontale Position der Konsole (100) durch ein Verschieben der Konsole (100) innerhalb einer durch eine Größe des Durchbruchs (104) vorgegebene Positionierungstoleranz (400) eingestellt wird und ein Winkelversatz (504) zwischen der Konsole (100) und dem Ankerbolzen (206) durch ein Verdrehen der Kugelgelenke (212) ausgeglichen wird,
wobei die Muttern (516) nach dem Ausrichten gekontert werden, um die Konsole (100) zwischen den Befestigungselementen (201) zu fixieren.

11. Verfahren nach Anspruch 10, wobei die Konsole (100) zumindest eine Ausrichtkimme (106) aufweist, wobei die Konsole (100) vor dem Kontern der Muttern (216) unter Verwendung der Ausrichtkimme (106) und eines Lots ausgerichtet wird.

12. Verfahren nach einem der Ansprüche 10 bis 11, wobei zwischen dem zweiten Befestigungselement (201) und der zweiten Mutter (216) eine Federscheibe (508) auf dem Ankerbolzen (206) angeordnet wird, wobei die Federscheibe (508) durch ein Vor-Anziehen der zweiten Mutter (216) vorgespannt wird, um die Konsole (100) zwischen den Klemmplatten (202) zu klemmen.

## Claims

1. Fastening system (200) for a bracket (100) of a rail system (102) of an elevator installation, wherein the fastening system comprises two fastening elements (201), an anchor bolt (206) and at least two nuts (216),
wherein each fastening element (201) for mounting a bracket (100) of a rail system (102) of an elevator installation has a clamping plate (202) having a through-hole (203) and a receiving sleeve (204) for receiving the anchor bolt (206), wherein the receiving sleeve (204) has a through-opening (208) for the anchor bolt (206) and an angularly movable ball joint (212) is formed between the clamping plate (202) and the receiving sleeve (204), and
wherein the anchor bolt (206) can be anchored in a wall (502) and has an external thread (210), the nuts (216) can be screwed onto the external thread (210), and the fastening elements (201) can be arranged between the nuts (216) on the anchor bolt (206), wherein the bracket (100) can be positioned, aligned and clamped between the fastening elements (201).

2. Fastening system (200) according to claim 1, wherein a concave abutment (510) of the ball joint (212) is formed in one or both of the clamping plates (202) and a convex pressure piece (512) of the ball joint (212) is formed on one or both of the receiving sleeves (204).

3. Fastening system (200) according to claim 2, wherein one or both of the concave abutments (510) is or are approximately hemispherical at least in some regions and/or one or both of the convex pressure pieces (212) is or are approximately hemispherical at least in some regions.

4. Fastening system (200) according to any of the preceding claims, wherein the through-hole or through-holes (203) through one or both of the clamping plates (202) is or are larger than the through-opening (208) of the associated receiving sleeve (204) in order to allow angular movement of the ball joint when the anchor bolt (206) is received in the through-opening (208).

5. Fastening system (200) according to any of the preceding claims, wherein a clamping surface (220) of one or both of the clamping plates (202) is or are substantially larger than a rear side of same clamping plate (202) opposite the clamping surface.

6. Fastening system (200) according to any of the preceding claims, wherein one or both of the clamping plates (202) has or have a diameter of between 12 centimeters and 15 centimeters.

7. Fastening system (200) according to any of the preceding claims, wherein the fastening system further comprises a spring washer (508), wherein the spring washer (508) can be arranged between one of the nuts (216) and one of the fastening elements (201) on the anchor bolt (206).

8. Rail system (102) for an elevator installation, wherein the rail system (102) has a bracket (100) which is fastened to a wall (502) using at least one fastening system (200) according to any of claims 1 to 7, wherein the bracket (100) has at least one opening (104) through which an anchor bolt (206) anchored in the wall (502) is guided, wherein the opening (104) is larger than a diameter of the anchor bolt (206) by a positioning tolerance (400) and an edge (128) of the opening (104) is clamped between the at least two fastening elements (201) which are pushed onto the anchor bolt (206), wherein the fastening elements (201) are clamped between two nuts (216) which are locked on the anchor bolt (206).

9. Rail system (102) according to claim 8, wherein the bracket (100) has at least one further opening (104) through which a further anchor bolt (206) anchored in the wall (502) is guided, wherein an edge (218) of the further opening (104) is clamped between two further fastening elements (201) according to any of claims 1 to 6, which elements are pushed onto the further anchor bolt (206), wherein the further fastening elements (201) are clamped between two nuts (216) which are locked on the further anchor bolt (206).

10. Method for mounting a bracket (100) of a rail system (102) of an elevator installation on a wall (502) using a fastening system (200) according to any of claims 1 to 7, wherein
- an anchor bolt (206) is anchored in the wall (502),
- a first nut (216) is screwed onto an external thread (210) of the anchor bolt (206),
- the first fastening element (201) having the receiving sleeve (204) is pushed onto the anchor bolt (206) until the receiving sleeve (204) abuts the first nut (216),
- the anchor bolt (206) is guided through an opening (104) in the bracket (100) until an edge (218) of the opening (104) abuts the clamping plate (202) of the first fastening element (201),
- the second fastening element (201) having the clamping plate (202) is pushed onto the anchor bolt (206) until the clamping plates (202) touch the edge (218) and
- a second nut (216) is screwed onto the external thread (210) in order to clamp the bracket (100) between the fastening elements (201),
wherein in order to align the bracket (100), a distance between the bracket (100) and the wall (502) is set by adjusting the first and second nuts (216) on the external thread (210), a vertical and a horizontal position of the bracket (100) is set by moving the bracket (100) within a positioning tolerance (400) which is predetermined by the size of the opening (104) and an angular misalignment (504) between the bracket (100) and the anchor bolt (206) is compensated for by rotating the ball joints (212),
wherein the nuts (516) are locked in place after the alignment in order to fix the bracket (100) between the fastening elements (201).

11. Method according to claim 10, wherein the bracket (100) has at least one alignment notch (106), wherein the bracket (100) is aligned using the alignment notch (106) and a plumb line prior to locking the nuts (216).

12. Method according to either claim 10 or claim 11, wherein a spring washer (508) is arranged on the anchor bolt (206) between the second fastening element (201) and the second nut (216), wherein the spring washer (508) is pretensioned by pre-tightening the second nut (216) in order to clamp the bracket (100) between the clamping plates (202).

## Revendications

1. Système de fixation (200) pour une console (100) d'un système de rails (102) d'une installation d'ascenseur, le système de fixation comprenant deux éléments de fixation (201), un boulon d'ancrage (206) et au moins deux écrous (216),
chaque élément de fixation (201) comportant, pour le montage d'une console (100) d'un système de rails (102) d'une installation d'ascenseur, une plaque de serrage (202) dotée d'un trou traversant (203) et une douille de réception (204) destinée à recevoir le boulon d'ancrage (206), la douille de réception (204) comportant un alésage traversant (208) pour le boulon d'ancrage (206) et une articulation à rotule (212) à mouvement angulaire étant formée entre la plaque de serrage (202) et la douille de réception (204), et
le boulon d'ancrage (206) pouvant être ancré dans une paroi (502) et comportant un filetage extérieur (210), les écrous (216) pouvant être vissés sur le filetage extérieur (210) et les éléments de fixation (201) pouvant être disposés entre les écrous (216) sur le boulon d'ancrage (206), la console (100) pouvant être positionnée, orientée et bloquée entre les éléments de fixation (201).

2. Système de fixation (200) selon la revendication 1, dans lequel une butée concave (510) de l'articulation à rotule (212) est formée dans l'une ou les deux plaques de serrage (202) et une pièce de pression convexe (512) de l'articulation à rotule (212) est formée sur l'un ou les deux manchons de réception (204).

3. Système de fixation (200) selon la revendication 2, dans lequel l'une ou les deux butées concaves (510) sont, au moins par endroits, approximativement hémisphériques
et/ou
l'une ou les deux pièces de pression convexes (212) ont, au moins par endroits, une forme approximativement hémisphérique.

4. Système de fixation (200) selon l'une des revendications précédentes, dans lequel le ou les trous traversants (203) pratiqués dans l'une ou les deux plaques de serrage (202) sont plus grands que l'alésage traversant (208) de la douille de réception associée (204), afin de permettre la mobilité angulaire de l'articulation à rotule lorsque le boulon d'ancrage (206) est logé dans l'alésage traversant (208).

5. Système de fixation (200) selon l'une des revendications précédentes, dans lequel une surface de serrage (220) de l'une ou des deux plaques de serrage (202) est ou sont sensiblement plus grande(s) que le côté arrière de cette même plaque de serrage (202), opposé à ladite surface de serrage.

6. Système de fixation (200) selon l'une des revendications précédentes, dans lequel l'une ou les deux plaques de serrage (202) présentent un diamètre compris entre 12 centimètres et 15 centimètres.

7. Système de fixation (200) selon l'une des revendications précédentes, dans lequel le système de fixation comprend en outre une rondelle élastique (508), ladite rondelle élastique (508) pouvant être disposée entre l'un des écrous (216) et l'un des éléments de fixation (201) sur le boulon d'ancrage (206).

8. Système à rail (102) pour une installation d'ascenseur, le système à rail (102) comportant une console (100) fixée à une paroi (502) à l'aide d'au moins un système de fixation (200) selon l'une des revendications 1 à 7, la console (100) comportant au moins un passage (104) à travers lequel passe un boulon d'ancrage (206) ancré dans la paroi (502), le passage (104) étant plus grand d'une tolérance de positionnement (400) que le diamètre du boulon d'ancrage (206) et un bord (128) de l'ouverture (104) est serré entre les au moins deux éléments de fixation (201) enfilés sur le boulon d'ancrage (206), les éléments de fixation (201) étant serrés entre deux écrous (216) bloqués sur le boulon d'ancrage (206).

9. Système à rail (102) selon la revendication 8, dans lequel la console (100) comporte au moins une autre ouverture (104) à travers laquelle passe un autre boulon d'ancrage (206) ancré dans la paroi (502), un bord (218) de cette autre ouverture (104) étant serré entre deux autres éléments de fixation (201) enfilés sur cet autre boulon d'ancrage (206) selon l'une des revendications 1 à 6, les autres éléments de fixation (201) étant serrés entre deux écrous (216) bloqués sur l'autre boulon d'ancrage (206).

10. Procédé de montage d'une console (100) d'un système de rails (102) d'une installation d'ascenseur sur une paroi (502) à l'aide d'un système de fixation (200) selon l'une des revendications 1 à 7, dans lequel
- un boulon d'ancrage (206) est ancré dans la paroi (502),
- un premier écrou (216) est vissé sur un filetage extérieur (210) du boulon d'ancrage (206),
- le premier élément de fixation (201) est enfilé sur le boulon d'ancrage (206), la douille de réception (204) en avant, jusqu'à ce que la douille de réception (204) vienne en butée contre le premier écrou (216),
- le boulon d'ancrage (206) est guidé à travers une ouverture (104) de la console (100) jusqu'à ce qu'un bord (218) de l'ouverture (104) vienne en butée contre la plaque de serrage (202) du premier élément de fixation (201),
- le deuxième élément de fixation (201) est enfilé sur le boulon d'ancrage (206), la plaque de serrage (202) en avant, jusqu'à ce que les plaques de serrage (202) entrent en contact avec le bord (218) et
- un deuxième écrou (216) est vissé sur le filetage extérieur (210) afin de serrer la console (100) entre les éléments de fixation (201),
l'alignement de la console (100) s'effectuant en réglant la distance entre la console (100) et la paroi (502) par un ajustement des premier et deuxième écrous (216) sur le filetage extérieur (210), la position verticale et la position horizontale de la console (100) étant réglées par un déplacement de la console (100) à l'intérieur d'une tolérance de positionnement (400) prédéfinie par la taille de l'ouverture (104), et un décalage angulaire (504) entre la console (100) et le boulon d'ancrage (206) est compensé par une rotation des articulations à rotule (212),
les écrous (516) étant bloqués après l'alignement afin de fixer la console (100) entre les éléments de fixation (201).

11. Procédé selon la revendication 10, dans lequel la console (100) comporte au moins un repère d'alignement (106), la console (100) étant alignée avant le serrage des écrous (216) à l'aide du repère d'alignement (106) et d'un fil à plomb.

12. Procédé selon l'une des revendications 10 à 11, dans lequel une rondelle élastique (508) est disposée sur le boulon d'ancrage (206), la rondelle élastique (508) étant précontrainte par un pré-serrage du deuxième écrou (216) afin de serrer la console (100) entre les plaques de serrage (202).
